# EUROPÄISCHE PATENTSCHRIFT

(11) **EP 1 446 599 B1**
(45) Veröffentlichungstag und Bekanntmachung des Hinweises auf die Patenterteilung: **11.04.2007**
(21) Anmeldenummer: 02779202.7
(22) Anmeldetag: 08.11.2002
(51) Int. Cl.: F16K 11/07, F15B 19/00, F15B 13/04

(54) **VORRICHTUNG ZUM VERRIEGELN EINES LÄNGSBEWEGLICH GEFÜHRTEN BAUTEILES**
DEVICE FOR LOCKING A COMPONENT THAT IS GUIDED IN A LONGITUDINALLY MOVABLE MANNER
DISPOSITIF POUR BLOQUER UN COMPOSANT A DEPLACEMENT LONGITUDINAL

(30) Priorität: 21.11.2001 DE 10157030
(43) Veröffentlichungstag der Anmeldung: 18.08.2004
(73) Patentinhaber: ROBERT BOSCH GMBH, 70442 Stuttgart (DE)
(72) Erfinder: OLBRICH, Gottfried, 74343 Sachsenheim (DE); STEPRATH, Werner, 41542 Dormagen (DE)
(86) Internationale Anmeldenummer: PCT/DE2002/004129
(87) Internationale Veröffentlichungsnummer: WO 2003/046420

(56) Entgegenhaltungen:
- DE-A- 3 923 743
- GB-A- 1 449 128
- US-A- 2 594 664
- US-A- 4 913 190

## Beschreibung

### Stand der Technik

Die Erfindung betrifft eine Vorrichtung zum Verriegeln eines längsbeweglich geführten Bauteiles, insbesondere eines Steuerschiebers eines hydraulischen Wegeventiles, mittels der das längsbewegliche Bauteil in axialen Stellungen über eine Rastierung haltbar ist.

Aus der gattungsgemäßen DE 39 23 743 A1 ist ein hydraulisches Wegeventil mit einer Verriegelungseinrichtung bekannt, mittels welcher ein in einem Gehäuse des Wegeventiles axial beweglich geführter Steuerschieber in seinen Arbeitsstellungen gehalten werden kann. Damit bei auftretendem Überdruck und auch bei Niederdruck der Steuerschieber in seine neutrale Mittelstellung von einer Federrückholeinrichtung zurückgeführt werden kann, ist der Verriegelungseinrichtung eine Ausklinkeinrichtung zugeordnet. Diese hat ein auf Überdruck ansprechendes Druckventil mit einem Kolbenglied und einer Feder mit einem auf Druck ansprechenden Kolben. Bei in Wirkung tretendem Kolben oder Kolbenglied wird ein Kegel verschoben, der in Raststellung befindliche Rastkugeln entlastet, so daß die Federrückholeinrichtung den Steuerschieber in seine neutrale Mittelstellung verschieben kann.

Nachteilig dabei ist jedoch, daß die Verriegelungseinrichtung bezüglich der Raststellungen des Steuerschiebers nicht variabel ist.

### Vorteile der Erfindung

Die erfindungsgemäße Vorrichtung zum Verriegeln eines längsbeweglich geführten Bauteiles mit den Merkmalen des Patentanspruches 1 hat demgegenüber den Vorteil, daß die Raststellungen des längsbeweglich geführten Bauteiles, welches in einer vorteilhaften Anwendung ein Steuerschieber sein kann, in Abhängigkeit einer Stellung des Kodierkörpers variabel einstellbar sind. Mit der erfindungsgemäßen Ausgestaltung des Kodierkörpers steht eine umschaltbare mechanische Rastung zur Verfügung, die mehrere Funktionskonfigurationen durch Drehverstellung des Kodierkörpers ermöglicht, Fehlbedienungen verhindert und nur geringe Fertigungskosten aufweist.

Des weiteren ist von Vorteil, daß die dem Rastkörper zugewandte, profilierte Fläche des Kodierkörpers, welche in axialer Richtung und in Umfangsrichtung unterschiedlich ausgebildet ist, eine sogenannte mechanische Kodierung aufweist und somit z. B. bei Anwendung der Erfindung bei einem hydraulischen Wegeventil verschiedenste Betriebszustände des Wegeventiles ermöglicht.

Darüber hinaus bietet die vorgestellte erfindungsgemäße Lösung den Vorteil, daß die maßgeblichen Funktionsteile durch rationelle Fertigungsverfahren hergestellt werden können, wobei die funktionsbestimmenden Maße der Funktionsteile der Vorrichtung mittels spanlos formender Werkzeuge realisiert werden.

Vorteilhafte Ausgestaltungen und Weiterbildungen der Erfindung ergeben sich aus den Patentansprüchen und aus den nachfolgend anhand der Zeichnung prinzipmäßig beschriebenen Ausführungsbeispiel.

### Zeichnung

In der Zeichnung sind 4 Ausführungsbeispiele einer erfindungsgemäßen Vorrichtung zum Verriegeln eines längsbeweglich geführten Bauteils dargestellt, die in der nachfolgenden Beschreibung näher erläutert werden. Es zeigen:
Figur 1 einen Längsschnitt durch eine Vorrichtung zum Verriegeln eines Steuerschiebers eines hydraulischen Wegeventiles,
Figur 2 einen Querschnitt durch die Vorrichtung zum Verriegeln eines Steuerschiebers entlang der Linie II-II aus Figur 1,
Figur 3a einen Querschnitt durch die Vorrichtung zum Verriegeln gemäß Figur 1 entlang der Linie IIIa-IIIa,
Figur 3b eine alternative Ausführungsform der Vorrichtung zu der Darstellung gemäß Figur 3a,
Figur 4 eine teilweise Darstellung eines Längsschnittes durch eine Vorrichtung zum Verriegeln eines Steuerschiebers, die eine weitere Ausführungsform gegenüber der in Figur 1 gezeigten Vorrichtung darstellt,
Figur 5 eine weitere Ausführungsform einer Vorrichtung zum Verriegeln eines Steuerschiebers im Längsschnitt,
Figur 6 eine Teildarstellung einer weiteren Ausführungsform einer Vorrichtung zum Verriegeln eines Steuerschiebers im Längsschnitt,
Figur 7 eine vergrößerte dreidimensionale Darstellung einer Rasteinrichtung der Vorrichtung gemäß Figur 6,
Figur 8 eine Einzeldarstellung eines Federsystemes der Rasteinrichtung gemäß Figur 7,
Figur 9 ein weiteres Ausführungsbeispiel einer Vorrichtung zum Verriegeln eines Steuerschiebers, wobei eine Ausklinkeinrichtung mit einem Druckschaltventil versehen ist,
Figur 10 eine Querschnittsdarstellung der Vorrichtungen zum Verriegeln eines Steuerschiebers der Figuren 4 und 5 entlang der Linie X-X,
Figur 11a eine Aufwicklung der Fläche des Kodierkörpers, welche die mechanische Kodierung darstellt,
Figur 11b einen Querschnitt durch den Kodierkörper im Bereich der mechanischen Kodierung in Alleinstellung,
Figur 12_eine teilweise dreidimensionale Darstellung eines Drehknopfes zum Verstellen der mechanischen Rastierung der Vorrichtung zum Verriegeln,
Figur 13 eine zu der in der Figur 12 dargestellten Ausführung alternative Ausführungsform des Drehknopfes,
Figur 14 einen Endbereich einer Vorrichtung zum Verriegeln eines Steuerschiebers im Längsschnitt,
Figur 15 eine Detailansicht eines Drehknopfes, wobei der Drehknopf mit einer Druckbegrenzungsfunktion versehen ist,
Figur 16 eine vergrößerte Darstellung einer Rasteinrichtung des Drehknopfes, und
Figur 17 die Detailansicht des Drehknopfes gemäß Figur 16, wobei der Drehknopf aufgrund eines anliegenden Überdruckes gegen seine Anpreßfeder von der Stirnseite des Gehäuses abhebt und einen Druckbegrenzungsspalt freigibt.

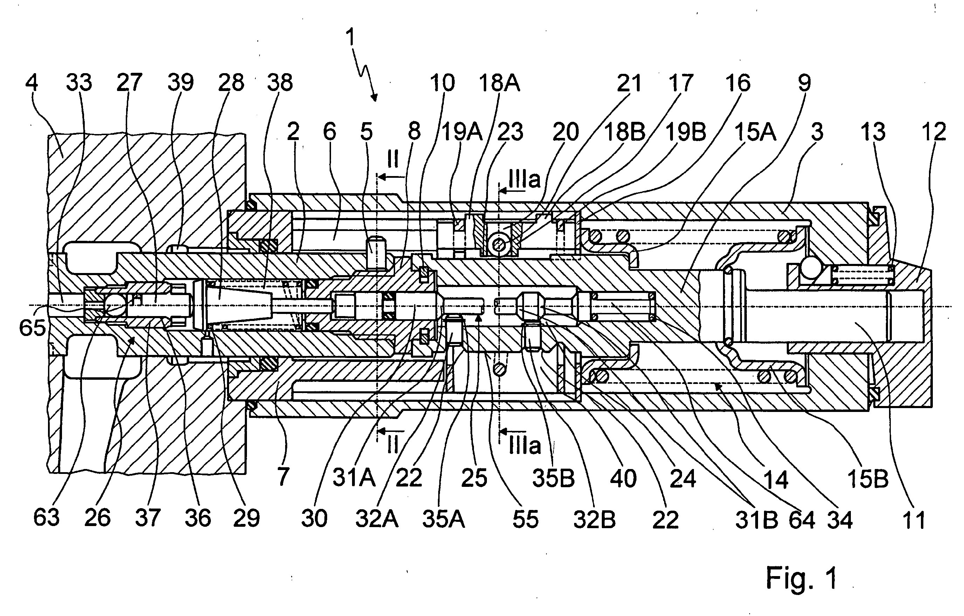

In der Figur 1 ist eine Vorrichtung 1 zum Verriegeln eines längsbeweglich geführten Bauteiles, welches hier ein Steuerschiebers 2 eines hydraulischen Wegeventiles ist, dargestellt. Die Vorrichtung 1 ist in einer verlängerten Achse des Steuerschiebers 2 angeordnet und weist eine längliche Federkappe 3 auf, über welche die Vorrichtung 1 an einem Ventilgehäuse 4 des hydraulischen Wegeventiles angeschraubt ist. Der Steuerschieber 2 ist über einen Stift 5 in einer Längsnut 6 eines Zwischenstückes 7 längsbeweglich verdrehgesichert geführt.

An seinem der Vorrichtung 1 zugewandten Ende ist der Steuerschieber 2 mit einer Schraube 8 verschlossen. Die Schraube 8 ist mit einem Kodierkörper 9 über einen Schnappring 10 in axialer Richtung fest aber drehbar verbunden. Der Kodierkörper 9 taucht mit seinem der Schraube 8 abgewandten Ende axial verschiebbar mit einem Rechteckprofil in eine entsprechend geformte Innenausnehmung eines am Ende der Federkappe 3 angeordneten und in den Innenraum der Federkappe 3 eingreifenden Drehknopfes 12 ein.

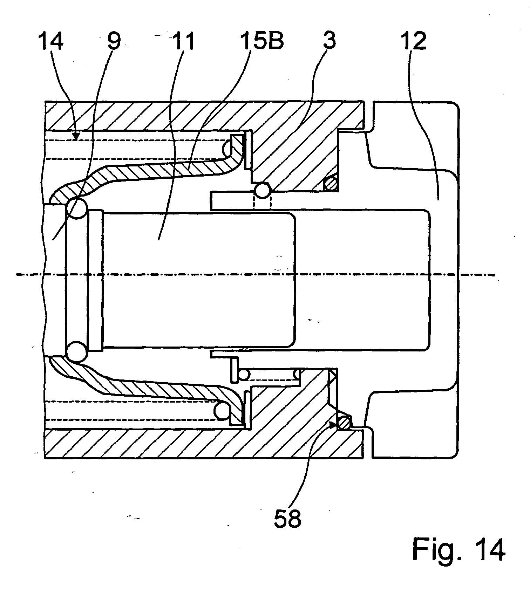

Der Drehknopf 12 ist auf seiner der Federkappe 3 zugewandten Stirnseite mit mehreren Rastelementen profiliert und axial mit einer Feder 13 gegen die Federkappe 3 gespannt, wobei die Darstellung der Rastelemente des Drehknopfes 12 in den Figuren 14 bis 17 näher gezeigt ist.

An dem Kodierkörper 9 greift eine Federrückstelleinrichtung 14 an, welche eine Mittenzentrierung und eine Rückstellfunktion für den Steuerschieber 2 darstellt. Die in der Figur 1 gezeigte Stellung des Steuerschiebers 2 entspricht einer sogenannten Neutralstellung des hydraulischen Wegeventiles, in welcher sich eine nicht näher dargestellte Hochdruckpumpe und das sich daran anschließende Hydrauliksystem des hydraulischen Wegeventiles in einem sogenannten Neutralumlauf befinden.

Die Federrückstelleinrichtung 14 ist mit zwei büchsenartigen Federanlageelementen 15A, 15B ausgebildet, welche jeweils ihre Anlageflächen bzw. Anschläge an der Federkappe 3 und an einer Anschlagscheibe 16 finden. Die Federrückstelleinrichtung 14 wirkt aufgrund ihrer Ausgestaltung und Anordnung in der Federkappe 3 in an sich bekannter Weise in beide axiale Verstellrichtungen des Steuerschiebers 2, wodurch der Steuerschieber 2 in gewünschter Art und Weise in seine Neutralstellung bewegt werden kann.

Eine axiale Verstellung des Steuerschiebers 2 wird im vorliegenden Ausführungsbeispiel über bestimmte an dem Steuerschieber 2 angreifende Druckverhältnisse bzw. Druckkräfte bewirkt, wobei es selbstverständlich im Ermessen des Fachmanns liegt, die axiale Verstellung des Steuerschiebers 2 über einen nicht näher dargestellten, außerhalb des ventilgehäuses 4 des hydraulischen Wegeventiles angeordneten Hebel vorzusehen.

Im Bereich des Kodierkörpers 9, zwischen der Schraube 8 und der Anschlagscheibe 16, befinden sich zwei gegenüberliegend angeordnete Rastleisten 17, wobei in Figur 1 lediglich eine Rastleiste dargestellt ist. Die Rastleisten 17 sind in zwei Nuten 18A, 18B der Federkappe 3 verdrehgesichert angeordnet und werden über zwei Halteringe 19A, 19B stabilisiert. In den Rastleisten 17 befindet sich jeweils eine Bohrung 20, in denen als Kugeln ausgebildete Rastkörper 21 in radialer Richtung beweglich geführt sind.

Des weiteren ist der Kodierkörper 9 im Bereich zwischen der Schraube 8 und der Anschlagscheibe 16 an seiner Umfangsfläche 55 mit Rastmulden 22 und vorstehenden Nasen als mechanische Anschläge für eine sogenannte Schieberhubbegrenzung versehen. Diese in der Figur 1 nicht näher dargestellten Nasen stoßen bei einem entsprechenden Schieberhub und einer bestimmten Stellung des Kodierkörpers 9 an einem vorstehenden Teil 23 der Rastleisten 17 an, womit eine weitere axiale Verstellung des Steuerschiebers 2 unterbunden wird. Die Ausgestaltung des Kodierkörpers 9 im Bereich zwischen der Schraube 8 und der Anschlagscheibe 16 mit den Rastmulden 22 und den Nasen stellt in diesem Bereich die mechanische Kodierung des Kodierkörpers 9 dar. In Abhängigkeit einer Drehung des Drehknopfes 12 kann die Rastierung der Vorrichtung 1 in Bezug auf die Rastkörper 21 auf einfache Art und Weise verändert werden und an verschiedene Anforderungsprofile angepaßt werden.

In einer in dem Steuerschieber 2, der Schraube 8 und dem Kodierkörper 9 gemeinsam ausgebildeten Längsbohrung 24 ist eine hydraulische Ausklinkeinrichtung 25 vorgesehen. Die Ausklinkeinrichtung 25 umfaßt ein Druckventil 26, das in der Längsbohrung 24 im Bereich des Steuerschiebers 2 angeordnet ist. Das Druckventil 26 weist einen kugelförmigen Ventilkörper 63 auf, der über einen ersten Bolzen 27 mit einem Kolbenkörper 28 in Wirkverbindung steht. Der Kolbenkörper 28 ist über eine Druckfeder 29, welche sich an der Schraube 8 abstützt, gegen den ersten Kolben gedrückt.

An den Kolbenkörper 28 schließt sich ein in der Schraube 8 und in dem Kodierkörper 9 längsbeweglich geführter Stufenkolben 30 an, welcher im Bereich des Kodierkörpers 9 zwei Steuerschrägen 31A, 31B aufweist, mit denen im Bereich der Rastmulden 22 in radialer Richtung des Kodierkörpers 22 bewegliche Ausklinkbolzen 32A, 32B angesteuert werden. In Abhängigkeit einer axialen Stellung des Stufenkolbens bzw. des Ausklinkschiebers 30 werden die Ausklinkbolzen 32A, 32B, welche zunächst an einem Bereich geringen Durchmessers und anschließend an einem Bereich größeren Durchmessers des Ausklinkschiebers 30 anliegen, in Bezug auf den Kodierkörper 9 radial nach außen verschoben. Befindet sich ein Rastkörper 21 in Deckung mit einem der Ausklinkbolzen 32A, 32B, wird der Rastkörper 21 aus einer Rastmulde 22 geführt. Dann wird der Steuerschieber 2 in Abhängigkeit der an dem Steuerschieber 2 angreifenden resultierenden axialen Kraft, die sich aus den angreifenden Druckkräften und der Federkraft der Federrückstelleinrichtung ergibt, in seine Neutralstellung oder eine einer weiteren Rastmulde 22 des Kodierkörpers 9 entsprechenden Raststellung verschoben.

Die Ausklinkeinrichtung 25 wird in Abhängigkeit eines Drukkes in einem dem Druckventil 26 vorgeschalteten, koaxial zu der Längsbohrung 24 angeordneten Kanal 33 ausgelöst. Dabei entspricht der Auslösedruckwert einem Ansprechwert des Druckventiles 26, der die Federkraft der Druckfeder 29 und der weiteren Druckfeder 34 überwinden muß. Mit dem Verstellweg des Ausklinkschiebers 30 wird der Ausklinkbolzen 32B und der Ausklinkbolzen 32A radial nach außen in der Führung des Kodierkörpers 9 verschoben, wobei der Verstellweg in Richtung des Rechteckprofiles 11 des Ausklinkschiebers durch die zylindrische Fortsetzung 64 begrenzt ist. Der radiale Hub der Ausklinkbolzen 32A, 32B wird durch Sicherungsringe 35A, 35B, die an in die Längsbohrung 24 ragenden Endbereichen der Ausklinkbolzen 32A, 32B angeordnet sind, begrenzt. Die Sicherungsringe 35A, 35B sind als Schnappringe ausgebildet, welche während der Montage der Ausklinkbolzen 32A, 32B durch Bohrungen des Kodierkörpers 9 geführt werden und beim Austreten aus dem Kodierkörper 9 ihren Durchmesser vergrößern, womit Sie den Hubweg der Ausklinkbolzen 32A, 32B wirkungsvoll begrenzen.

Wenn die Ausklinkbolzen 32A, 32B während eines Ansprechens bzw. Auslösens der Ausklinkeinrichtung 25 unter einem Rastkörper 21 angeordnet sind, wird der Rastkörper 21 aus der entsprechenden Rastmulde 22 gedrückt. Damit ist das Ausklinken bzw. ein sogenannter "kick-out" wirksam, das heißt, die Rastwirkung der Vorrichtung 1 wird spontan aufgehoben, und der Steuerschieber 2 wird durch die Wirkung der Federrückstelleinrichtung 14 vorzugsweise in seine Neutralstellung verstellt.

Ist die direkte Zuordnung der Ausklinkbolzen 32A, 32B in Bezug auf die Rastkörper 21 nicht gegeben, weil der Kodierkörper 9 in eine andere Drehposition eingestellt worden ist, werden bei einem Ansprechen der Ausklinkeinrichtung 25 die Ausklinkbolzen 32A, 32B trotzdem radial nach außen gedrückt, wobei ein Ausklinken der Rastierung der Vorrichtung 1 bzw. ein Ausrasten der Rastkörper 21 aus den Rastmulden 21 nicht erfolgt.

Bei der in Figur 1 dargestellten axialen Position des Ausklinkschiebers 30 ist ein nicht näher dargestellter, mit dem Ausklinkbolzen 32A zusammenwirkender Rastkörper in seiner gerasteten Position angeordnet. Der Ausklinkbolzen 32A ist von dem Ausklinkschieber 30 nicht radial nach außen gedrückt und befindet sich in seiner "eingefahrenen" Position. Der Ausklinkbolzen 32A wird durch eine auf den Rastkörper und somit auch auf den Ausklinkbolzen 32A radial einwirkende Druckkraft eines in Figur 3a näher dargestellten Federsystems 43 in seiner radial weiter in den Kodierkörper 9 "eingefahrenen" Position in Anlage an dem Ausklinkschieber 30 gehalten.

Der Ausklinkbolzen 32B ist durch Anlage an dem zwischen den beiden Steuerschrägen 31B ausgebildeten verdickten Durchmesserbereich des Ausklinkschiebers 30 bezogen auf den Kodierkörper 9 in seiner "ausgefahrenen" Position angeordnet, so daß ein mit dem Ausklinkbolzen 32B korrespondierender Rastkörper aus der Rastmulde 22 gedrückt ist und die Rastung aufgehoben ist.

Zur Minimierung eines Leckölstromes im Bereich des Druckventiles 26 ist das Druckventil 26 mit einem langen kleinen Spalt 36 zwischen einer Führungsbuchse 37 und dem ersten Bolzen 27 ausgebildet, der vorzugsweise über eine Dichtung 65 abgedichtet ist. Ein Federraum 38 der Ausklinkeinrichtung 25 ist mit einem Rücklaufbereich 39 des hydraulischen Wegeventiles, der eine Verbindung mit einem nicht näher dargestellten Tank aufweist, verbunden, so daß über den Spalt 36 in den Federraum 38 eintretende Hydraulikflüssigkeit abgeführt werden kann und ein Druckaufbau, der zu einer Beeinträchtigung der Funktion des hydraulischen Wegeventiles führen würde, wirkungsvoll vermieden wird. Ein in der Federkappe 3 ausgebildeter Rastraum 40 wird nicht mit Hydraulikflüssigkeit beaufschlagt, da dieser gegenüber dem Federraum 38 über die Schraube 8 abgedichtet ist. Der Rastraum 40 ist jedoch mit einer Dauerschmierung zur Minimierung von Reibkräften versehen.

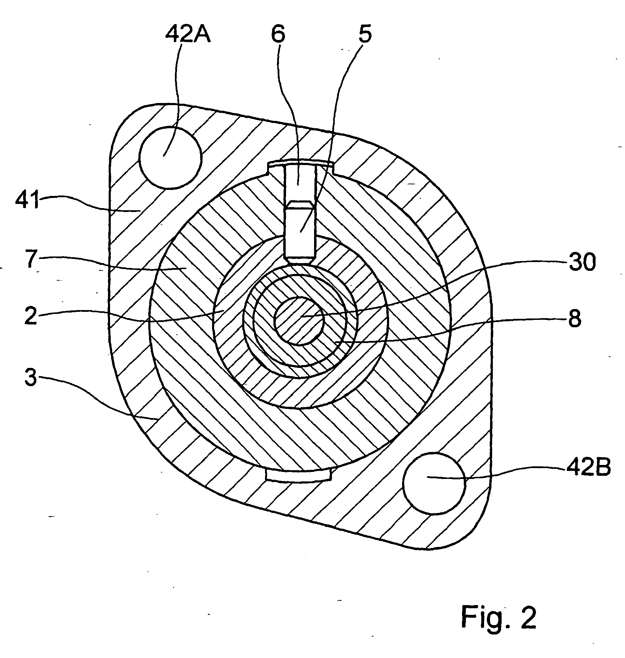

In Figur 2 ist ein Querschnitt durch die Vorrichtung 1 zum Verriegeln des Steuerschiebers 2 entlang der Linie II-II dargestellt. Dabei ist ein flanschartiger Bereich 41 der Federkappe 3 dargestellt, der mit zwei Durchgangsbohrungen 42A, 42B zum Anschrauben der Federkappe 3 an dem Ventilgehäuse 4 versehen ist. Im Inneren der Federkappe 3 ist das Zwischenstück 7 mit dem Stift 5 und der Längsnut 6 dargestellt, welche zur Drehsicherung des Steuerschiebers 2 in der Federkappe 3 vorgesehen sind.

Figur 3a zeigt die Vorrichtung 1 zum Verriegeln des Steuerschiebers 2 im Querschnitt entlang der Linie IIIa-IIIa. Dabei ist ein im Inneren der Federkappe 3 angeordnetes Federsystem 43 näher dargestellt, welches aus zwei gewundenen bzw. gebogenen Teilen besteht, die bei der Montage der Vorrichtung 1 ineinander eingehängt werden. Mittels dem Federsystem 43 werden die Rastkörper 21 gegen den Kodierkörper 9 gespannt bzw. gedrückt. Das Federsystem 43 und die Rastkörper 21 sind radial schwimmend gelagert, wodurch Achsfluchtungsfehler zwischen der Federkappe 3 und dem Kodierkörper 9 auf einfache Art und Weise ausgeglichen werden. Des weiteren sind die als Kugeln ausgebildeten Rastkörper 21 durchbohrt und auf das Federsystem 43 bzw. deren Teile aufgeschoben, so daß die Spannfederteile bzw. das Federsystem 43 in den Bohrungen der Rastkörper 21 läuft. Damit wird eine rollende Bewegung der Rastkörper 21 beim Ausrasten aus den Rastmulden 22 erzielt, wodurch im Betrieb ein erheblich kleinerer Verschleiß der Rastierung der Vorrichtung 1 erzielt wird.

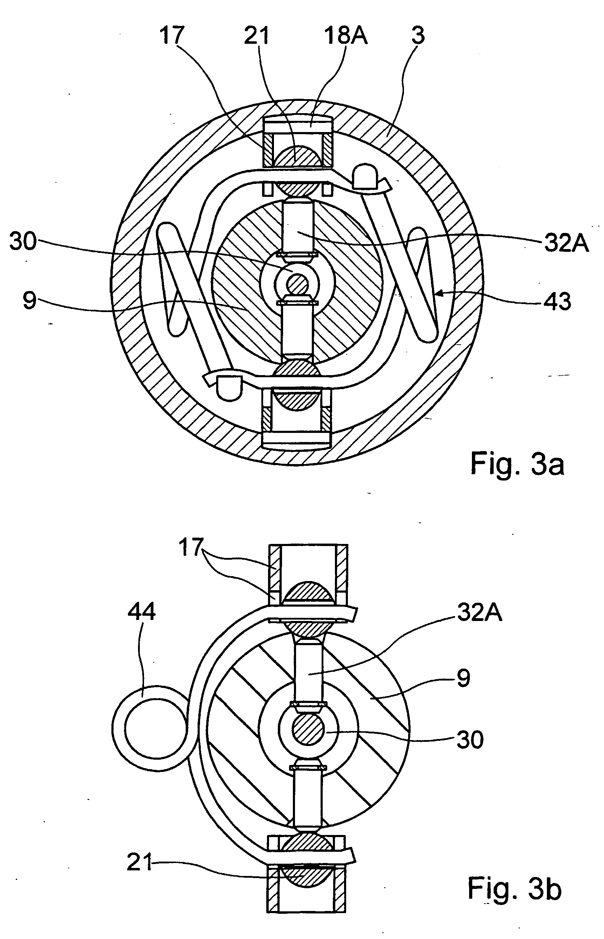

Alternativ hierzu ist in Figur 3b ein weiteres Federsystem dargestellt, welches durch lediglich ein einziges Federelement 44 gebildet ist und die Rastkörper 21 genauso wie das Federsystem 43 aus Figur 3a gegen den Kodierkörper 9 drückt bzw. diese in vorgespannter Lage hält.

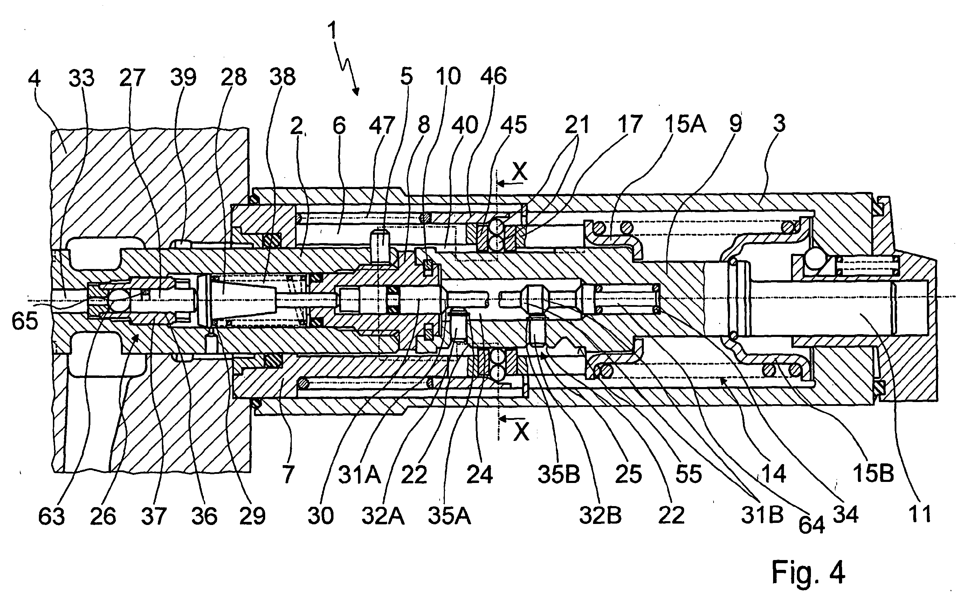

Die Figuren 4 bis 6 und 9 zeigen vier weitere Ausführungsbeispiele der erfindungsgemäßen Vorrichtung 1, wobei funktionsgleiche bzw. baugleiche Bauteile mit den selben Bezugszeichen wie bei der Beschreibung der Figur 1 verwendet werden.

In der Figur 4 sind die Rastleisten 17 gemäß Figur 1 in das Zwischenstück 7 derart integriert, daß die Rastkörper 21, welche vorliegend ebenfalls als zwei in radialer Richtung hintereinander angeordnete Kugeln ausgebildet sind, in radialer Richtung in Buchsen 45, die in das Zwischenstück 7 eingepreßt sind, bzw. in Bohrungen der Buchsen 45 beweglich geführt sind und von einer in axialer Richtung der Federkappe 3 verschiebbaren Konusbuchse 46 gegen den Kodierkörper 9 gedrückt sind. Dabei weist die Konusbuchse 46 im Bereich der Rastkörper 21 eine Schräge auf, über welche die Rastkörper 21 in radialer Richtung in eine Rastmulde 22 des Kodierkörpers 9 geführt werden. An ihrer den Rastkörpern 21 abgewandten Stirnseite ist die Konusbuchse 46 über eine in axialer Richtung des Kodierkörpers 9 wirkende Spannfeder 47 an dem Zwischenstück 7 angefedert.

Bei Aktivierung der Ausklinkeinrichtung 25 und einer vorliegenden Deckung zwischen den Rastkörpern 21 und den Ausklinkbolzen 32A bzw. 32B werden die Rastkörper entgegen der Federkraft der Spannfeder 47 radial nach außen gedrückt, wodurch die Konusbuchse 46 in Richtung des Ventilgehäuses 4 verschoben wird und die Rastkörper 21 entlang der Schräge der Konusbuchse 46 in Richtung der Innenseite der Federkappe 3, d. h. in Bezug auf den Kodierkörper 9 radial nach au-ßen aus der entsprechenden Rastmulde 22 des Kodierkörpers 9, geführt werden. Anschließend wird der Steuerschieber 2 in seine neutrale Position oder in eine in Verschieberichtung des Steuerschiebers 2 bzw. des Kodierkörpers 9 liegende, einer weiteren Rastmulde 22 entsprechende Raststellung geführt.

Die Buchsen 45 stellen in Verbindung mit dem Kodierkörper 7 die Hubanschläge des Steuerschiebers 2 in Abhängigkeit einer Position des Kodierkörpers 9 bzw. des Drehknopfes 12 dar.

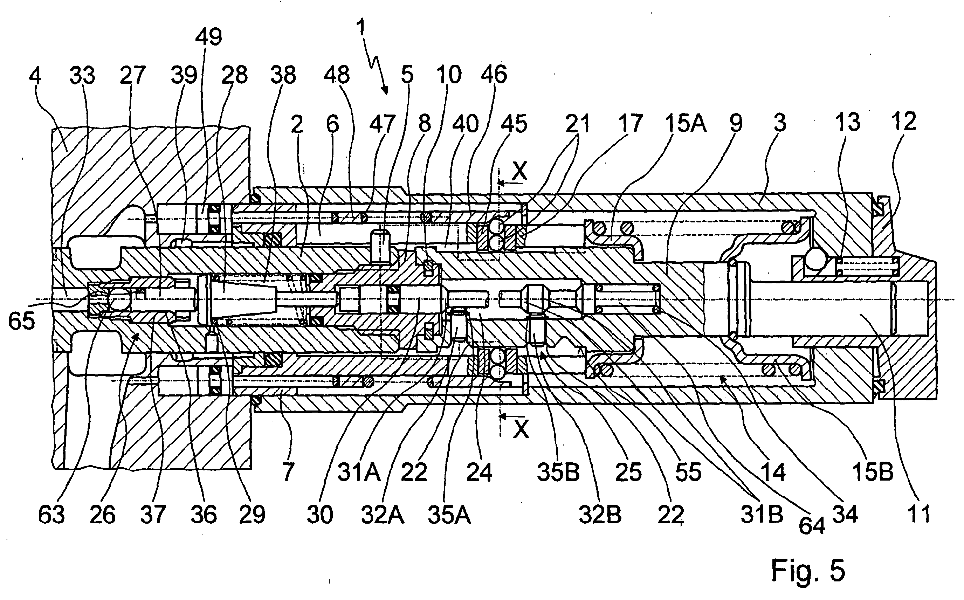

Figur 5 stellt eine Weiterbildung des Ausführungsbeispieles gemäß der Figur 4 dar, wobei die Spannfeder 47 an ihrem der Konusbuchse 46 abgewandten Ende über einen Ring 48 und einen Stufenkolben 49 durch einen anliegenden Betriebsdruck auf Anschlag vorgespannt wird, womit die Rastierung der Vorrichtung 1 funktionsbereit ist und die Rastkörper 21 gegen den Kodierkörper 9 gedrückt sind.

Für den Fall, daß der Betriebsdruck gegen Null absinkt, wird der Stufenkolben 49 unter der Wirkung der Spannfeder 47 in Richtung des Ventilgehäuses 4 verschoben, womit sich die Spannfeder 47 selbst entspannt. Die Konusbuchse 46 wird dann ebenfalls nicht mehr mit der höheren Federkraft der Spannfeder 47, welche bei einem höheren Betriebsdruck vorliegt, beaufschlagt. In diesem Betriebszustand ist die auf die Rastkörper 21 einwirkende Haltekraft in den Rastmulden 22 des Kodierkörpers 9 nicht mehr ausreichend, um den Steuerschieber 2 bzw. den Kodierkörper 9 in dieser Raststellung zu halten. Die Federrückstelleinrichtung 14 verstellt den Steuerschieber 2 in seine Neutralstellung.

Durch die selbsttätige Rückführung in die Grundstellung wird in vorteilhafter Weise eine zusätzliche Funktion realisiert, mit der in einigen Anwendungsbereichen Sicherheitsanforderung zuverlässig und einfach erfüllt werden können. So fordern z. B. manche Traktorenhersteller, daß nach dem Abstellen des Motors jede noch gerastete Schieberfunktion selbsttätig in die Grundstellung zurückgeführt wird. Dadurch soll beim Wiedereinschalten des Motors eine unbeabsichtigte Zylinderfunktion eines dem hydraulischen Wegeventil nachgeschalteten Verbrauchers vermieden werden.

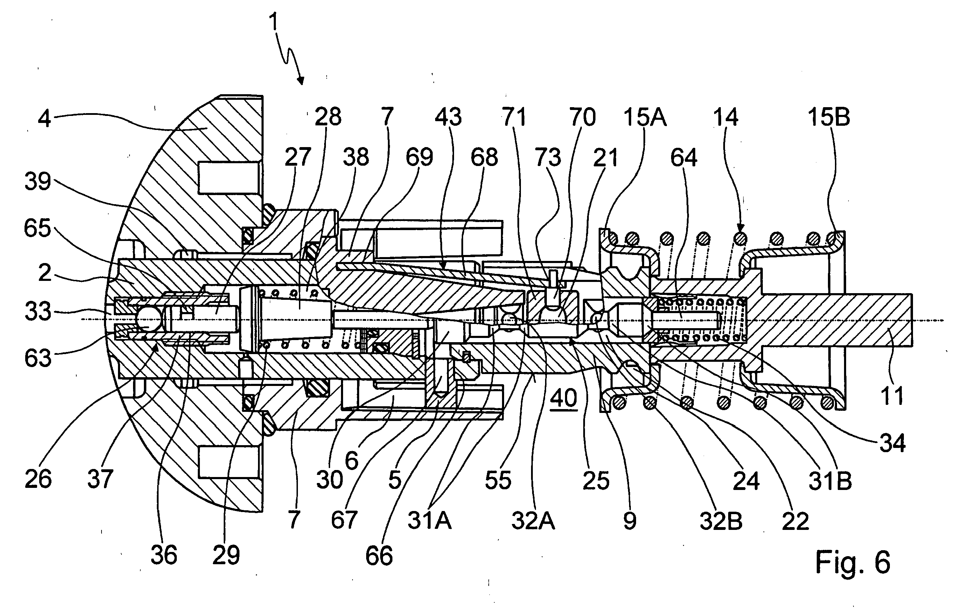

Eine weitere Ausführungsform der Vorrichtung 1 zum verriegeln des längsbeweglich geführten Steuerschiebers 2 ist in Figur 6 dargestellt. Der Steuerschieber 2 ist wiederum über den Stift 5 in der Längsnut 6 des Zwischenstückes 7 längsbeweglich verdrehgesichert geführt, wobei_der Stift 5 in eine Bohrung 66 des Steuerschiebers 2 eingepreßt ist. Im Bereich seines in den Steuerschieber 2 eingepreßten Endes ist der Stift 5 mit einer Sacklochbohrung 67 ausgebildet, welche dem Stift 5 während des Einpreßvorganges in seinem Einpreßbereich eine größere Elastizität verleiht.

Das Federsystem 43 der Vorrichtung 1 gemäß der Darstellung in Figur 6 weist vorliegend jeweils zwei Blattfedern 68 auf, die in Einbaulage mit einem Ende in einem Schlitz 69 des Zwischenstücks 7 eingesteckt sind und mit ihrem anderen Ende die für eine Rastierung in dem Kodierkörper 9 erforderliche Druckkraft auf den Rastkörper 21 aufbringen. Dazu ist im Bereich eines dem in dem Schlitz 69 angeordneten Ende abgewandten Endes der Blattfeder 68 jeweils ein Druckbolzen 70 vorgesehen, über welchen die Federkräfte der Blattfedern 68 auf den wenigstens annähernd kugelförmigen Rastkörper 21 aufgebracht werden. Die Druckbolzen 70 sind mit ihrem dem Rastkörper 21 abgewandten Ende durch zwei Aussparungen 73 gesteckt, wobei das durch die Blattfeder 68 geführte Ende der Druckbolzen 70 mit einem geringeren Durchmesser als der Rest der Druckbolzen 70 ausgeführt ist.

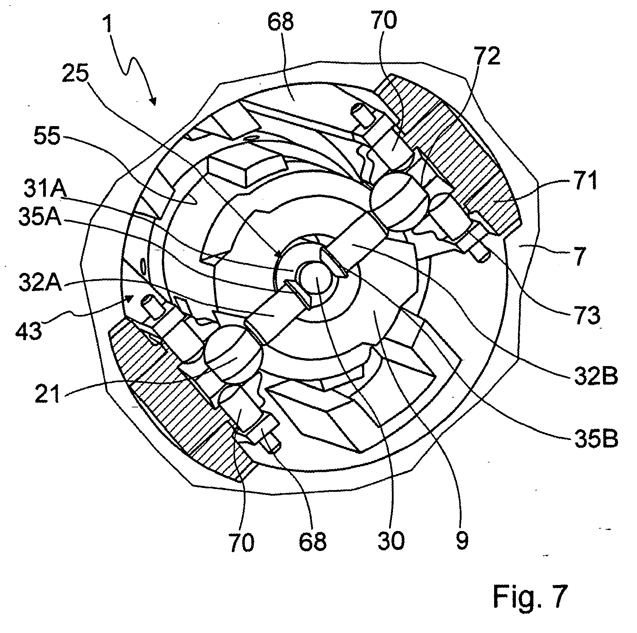

In der Figur 7 ist eine dreidimensionale Schnittansicht der Vorrichtung 1 zum Verriegeln des Steuerschiebers 2 dargestellt, wobei die Anordnung der Blattfedern 68, der Druckbolzen 70 und des Rastkörpers 21 in einer Führungsbuchse 71 näher gezeigt ist. Die Druckbolzen 70 sind jeweils an ihrem dem Rastkörper 21 zugewandten Ende mit einer kugelähnlichen Kontur ausgebildet, mit welcher sie an einer ebenfalls kugelähnlichen Kontur des Rastkörpers 21 anliegen. Die Führungsbuchse 71 ist in das Zwischenstück 7 eingepreßt und nimmt neben dem Rastkörper 21, der in der Führungsbuchse 71 radial verschieblich und drehbar geführt ist, die beiden Druckbolzen 70 in axialer Richtung verschieblich auf.

Mit den kugelähnlichen Konturen der Druckbolzen 70 und des Rastkörpers 21 wird im Anlagebereich eine derartige Umlenkung der Druckkräfte der Blattfedern 68 erreicht, daß der Rastkörper 21 in radialer Richtung gegen den Kodierkörper 9 gedrückt ist. Ein weiterer Effekt der kugelähnlichen Konturen ist, daß sich der Angriffswinkel in den Berührpunkten in Abhängigkeit einer radialen Position des Rastkörpers 21 bzw. in Abhängigkeit des Hubweges des Rastkörpers 21 gegenüber dem Kodierkörper 9 derart ändert, daß in eingerasteter Position des Rastkörpers 21 in dem Kodierkörper 9 die größte Kraftübersetzung vorliegt und somit die größte Rastkraft von den Blattfedern 68 auf den Rastkörper 21 aufgebracht wird.

Der Rastkörper 21 rollt bei einer Drehbewegung des Kodierkörpers 9 auf dessen Oberfläche ab, wobei der Rastkörper 21 in seiner Abrollgeometrie der Geometrie der Oberfläche des Kodierkörpers 9 angepaßt ist. Dazu ist der Rastkörper 21 in seinem mittleren Bereich wenigstens annähernd zylinderförmig ausgeführt. Eine Oberfläche 72 des zylindrischen Bereiches des Rastkörpers 21 ist dabei mit einer vorzugsweise mittels Schleifen hergestellten konkaven Kontur im Mikrofeinbereich versehen, wodurch eine linien- bzw. flächenartige Berührung zwischen dem Rastkörper 21 und der Fläche 55 des Kodierkörpers 9 erreicht wird. Somit wird auf einfache Art und Weise eine Flächenpreßung im Berührbereich zwischen dem Rastkörper 21 und dem Kodierkörper 9 erheblich reduziert und der Verschleiß im Betrieb der Vorrichtung 1 deutlich verringert.

Selbstverständlich liegt es im Ermessen des Fachmannes die Kontaktflächen der Druckbolzen 70 des Rastkörpers mit einer anderen geeigneten Kontur auszubilden, wobei bei der Auswahl der Konturen zu beachten ist, daß die in radialer Richtung des Kodierkörpers 9 vorgesehene Verschieblichkeit des Rastkörpers 21 zwischen den beiden Druckbolzen 70 in allen Betriebssituationen der Vorrichtung 1 gewährleistet ist und eine Selbsthemmung sicher vermieden wird.

Die in der Figur 7 dargestellten Rastkörper 21 befinden sich beide an dem Kodierkörper 9 in ihrer gerasteten Position. Zum Entrasten der Rastkörper 21 werden die beiden Ausklinkbolzen 32A, 32B in Abhängigkeit eines Stellweges des Ausklinkschiebers 30 in radialer Richtung des Kodierkörpers nach außen gedrückt. Gleichzeitig drücken die Ausklinkbolzen 32A, 32B die beiden Rastkörper 21 aus ihrem Eingriff mit dem Kodierkörper 9, was das Entrasten der Vorrichtung 1 bzw. deren Rastierung zur Folge hat.

Die Ausklinkfunktion bei den Ausführungsformen gemäß der Figuren 5 und 6 der Vorrichtung 1 wird genauso wie bei den Vorrichtungen gemäß der Figur 1 und der Figur 4 über den Ausklinkschieber 30 und das Druckventil 26 in Abhängigkeit eines an dem Druckventil 26 anliegenden Betriebsdruckes aktiviert. Der Ausklinkbolzen 32A ist in den Figuren 1, 4 und 5 in seiner eingefahrenen bzw. rastenden Position und der Ausklinkbolzen 32B ist denselben Darstellungen in seiner ausgefahrenen bzw. entrastenden Position gezeigt.

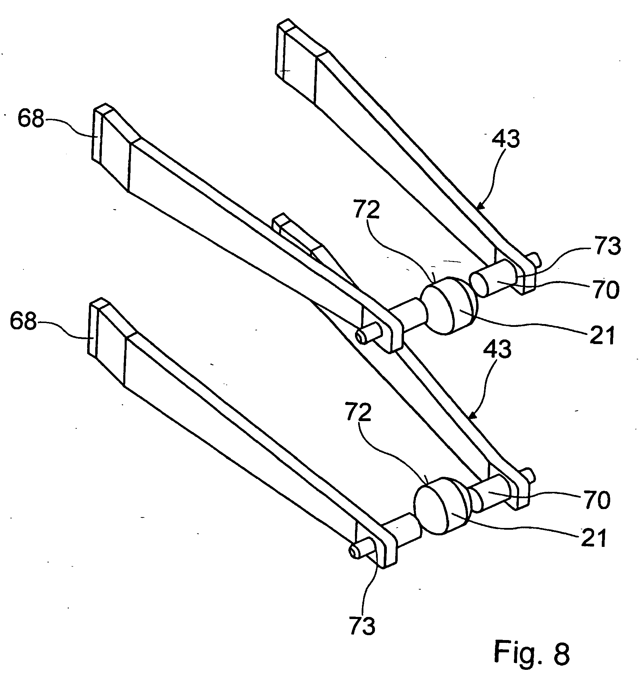

In Figur 8 sind die Blattfedern 68, die Druckbolzen 70 und die Rastkörper 21 in einer dreidimensionalen Einzelansicht gezeigt. Dabei wirken auf jeden Rastkörper 21 jeweils zwei Blattfedern 68 über jeweils zwei Druckbolzen 70 ihre Druckkräfte aus. Die Blattfedern 68 sind jeweils mit einem ersten Bereich ausgebildet, der teilweise in den in Fig. 6 näher dargestellten Schlitz 69 eingeschoben ist, und mit einem zweiten Bereich ausgebildet ist, der einen stumpfen Winkel mit dem ersten Bereich einschließt, so daß die Blattfedern 68 in Einbaulage vorgespannt sind.

Es liegt selbstverständlich im Ermessen des Fachmannes, das Federsystem 43 derart auszugestalten, daß auf jeden Rastkörper 21 jeweils nur eine oder auch mehr als zwei Blattfedern 68 auf diesen einwirken. Darüber hinaus ist es denkbar, die Rastkörper mit einer anderen für den jeweilig vorliegenden Anwendungsfall geeigneten Federart, wie beispielsweise Tellerfedern, Schraubenfedern oder dgl., mit der erforderlichen Rastkraft zu beaufschlagen.

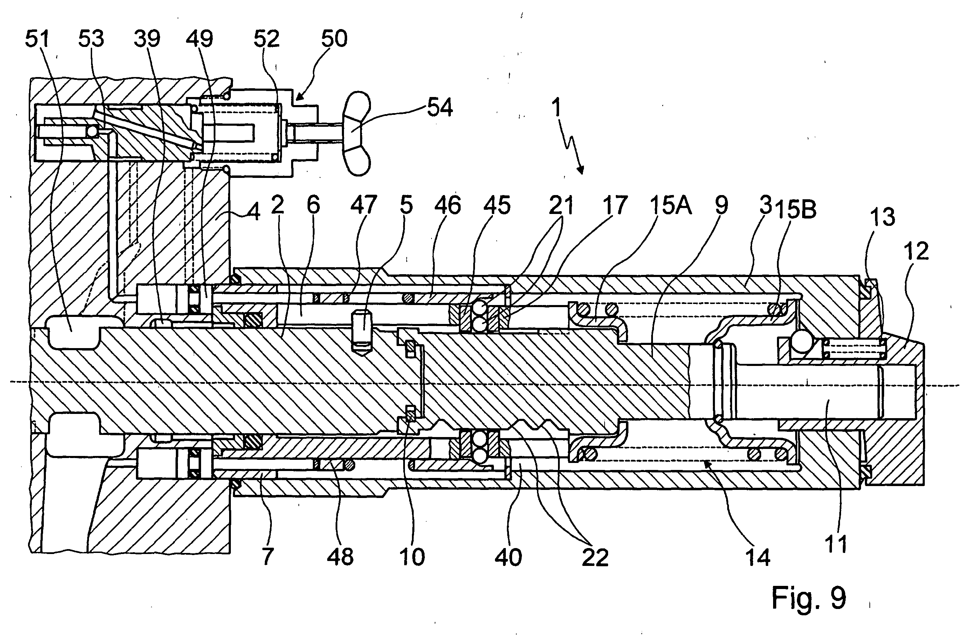

Hiervon abweichend weist die Ausklinkeinrichtung 25 der Vorrichtung 1 gemäß dem Ausführungsbeispiel nach Figur 9 ein Druckschaltventil 50 im Ventilgehäuse 4 des hydraulischen Wegeventiles auf. Dabei ist die vorspannbare Rastfunktion mit der Konusbuchse 46 aus Figur 5 mit dem Druckschaltventil 50 kombiniert.

Zum Aktivieren der Ausklinkeinrichtung 25 wird die Vorspannkraft der Spannfeder 47 wie folgt reduziert:

Das als 3/2-Ventil ausgebildete Druckschaltventil 50 hält bei aktivierter Rastierung der Vorrichtung 1 eine Verbindung zwischen einem Betriebsraum 51 und dem Stufenkolben 49 offen, wobei der Betriebsraum 51 mit Betriebsdruck des hydraulischen Wegeventils beaufschlagt ist. Steigt der Betriebsdruck in dem Betriebsraum 51 an und erreicht er einen Ansprechdruck des Druckschaltventiles 50, schaltet das Druckschaltventil gegen eine Federkraft einer Druckschaltventilfeder 52 um und sperrt die Verbindung zwischen dem Betriebsraum 51 und dem Stufenkolben 49. Dabei wird der Stufenkolben 49 mit dem Rücklaufbereich 39 verbunden und entspannt, wodurch die Spannfeder 47 entspannt wird und der Steuerschieber 2 in vorbeschriebener Art und Weise in seine Neutralstellung bewegt wird. Die nicht näher dargestellte Hydraulikpumpe wird dabei ebenfalls in den sogenannten Neutralumlauf entlastet.

Zusätzlich kann das Druckschaltventil 50 durch einen Eingriff eines Bedieners dahingehend blockiert werden, daß ein Druckschaltventilkolben 53 durch den anliegenden Betriebsdruck nicht verschoben wird. Dies wird dadurch erreicht, daß eine außerhalb des Ventilgehäuses 4 angeordnete Stellschraube 54 an dem Druckschaltventilkolben 53 zum Anliegen kommt und den Stellweg des Druckschaltventilkolbens 53 blockiert. Durch diese Maßnahme wird die Ausklinkfunktion aufgehoben, wobei die Rastierung der Vorrichtung 1 jedoch aktiviert bleibt.

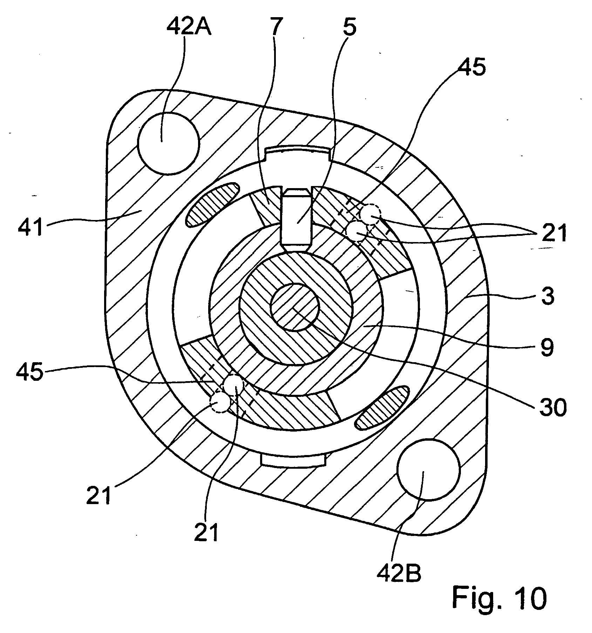

Figur 10 zeigt einen Querschnitt durch die Vorrichtung 1 entlang der Linie X-X aus den Figuren 4 und 5. Dabei ist die Anordnung des Stiftes 5 und der Buchsen 45 in der Federkappe 3 näher dargestellt.

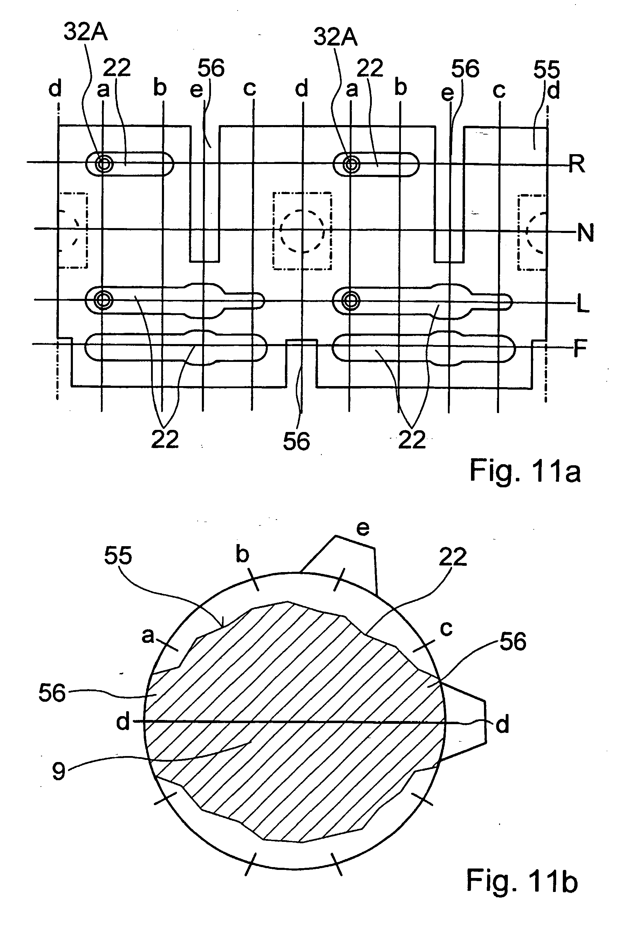

Die Figur 11a zeigt den Bereich des Kodierkörpers 9 bzw. dessen den Rastkörpern 21 zugewandte Fläche 55 als Abwicklung, wobei die einzelnen Rastmulden 22 und die zuvor beschriebenen Anschlagnasen 56 dargestellt sind. Diese Abwicklung stellt die mechanische Kodierung der Rastierung bzw. des Kodierkörpers 9 der Vorrichtung 1 dar, wobei die Buchstaben "R", "N", "L" und "F" jeweils bestimmte axiale Rastpositionen des Steuerschiebers 2 repräsentieren und die kleinen Buchstaben "a" bis "e" in axialer Erstreckung des Kodierkörpers 9 jeweils eine Konfigurationsachse bezeichnen. Dabei steht "R" für eine Hebefunktion, "N" für die Neutralstellung des Steuerschiebers 2, "L" für eine Senkfunktion und "F" für einen sogenannten Freigang des hydraulischen Wegeventiles. Einen weiteren Konfigurationsparameter stellen die Anschlagnasen 56 der Konfigurationsachsen "d" und "e" dar, in welcher die Rastpositionen "R" und "N" oder die Rastposition "F" gesperrt sind.

Das in Figur 11a in der Konfigurationsachse "d" dargestellte strichlierte Viereck mit einem darin angeordneten, strichliert dargestellten Kreis soll lediglich den Bereich darstellen, in welchem die Rastkörper 21 in Neutralstellung des Steuerschiebers 2 positioniert sind.

Die Rastmulden 22 des Kodierkörpers 9 sind in axialer Richtung des Kodierkörpers 9 beabstandet zueinander angeordnet und parallel zueinander verlaufend ausgebildet. Zur Erhöhung einer Rastkraft ist insbesondere im Bereich der Konfigurationsachse "e" der Durchmesser der Rastmulden 22 vergrößert ausgebildet, so daß die Rastkörper 21 entsprechend tiefer in den Kodierkörper 9 einrasten. Des weiteren sind im Bereich der Rastmulden 22 auf der Konfigurationsachse "a" Doppelkreise eingezeichnet, welche die Positionen der Ausklinkbolzen 32A, 32B wiedergeben.

Bei einer Betätigung des Steuerschiebers entlang der Konfigurationsachse "a" rastet der Steuerschieber in der Stellung "R" sowie in den Stellungen "L" und "F" ein. Wird der Drehknopf 12 gedreht, wodurch eine andere Konfigurationsachse angewählt wird, so dreht sich der Kodierkörper 9 unter den Rastkörpern 21, und die Rastkörper 21 werden entlang einer anderen Konfigurationsachse in Abhängigkeit der Betätigung des Steuerschiebers 2 bewegt.

Wird beispielsweise die Konfigurationsachse "d" eingestellt, so stehen den Rastkörpern 21 keine Rastmulden 22 zur Verfügung, wodurch keine Rastung eingestellt werden kann. Statt dessen steht für den Hub des Steuerschiebers 2 eine Anschlagnase 56 für eine mechanische Begrenzung des Steuerschieberhubes zur Verfügung, so daß aus einem Vier-Stellungsventil ein Drei-Stellungsventil mit blockiertem Freigang wird.

Selbstverständlich liegt es im Ermessen des Fachmannes, abweichend von der in der Figur 8a dargestellten über zweimal 180° gezeigten Abwicklung der Fläche 55 des Kodierkörpers 9 weitere Konfigurationen bzw. eine davon abweichende mechanische Kodierung für den jeweilig vorliegenden Anwendungsfall eines hydraulischen Wegeventiles in Kombination mit einer der beschriebenen Ausführungsformen_der Ausklinkeinrichtung 25 bzw. der Rastierung der Vorrichtung 1 vorzusehen.

Ein stark schematisiert dargestellter Querschnitt durch den Kodierkörper ist in Figur 11b dargestellt, wobei nochmals die einzelnen Konfigurationsachsen "a" bis "e" eingezeichnet sind. Hier soll die einfache Herstellbarkeit des Kodierkörpers 9 mit seiner mechanischen Kodierung herausgestellt werden. Die Rastnuten 22 sowie die Anschlagnasen 56 sind durch Formteilung eines Gießwerkzeuges entlang einer gedachten Linie der Konfigurationsachsen "d-d" leicht herstellbar, wodurch die Herstellungskosten gering gehalten werden.

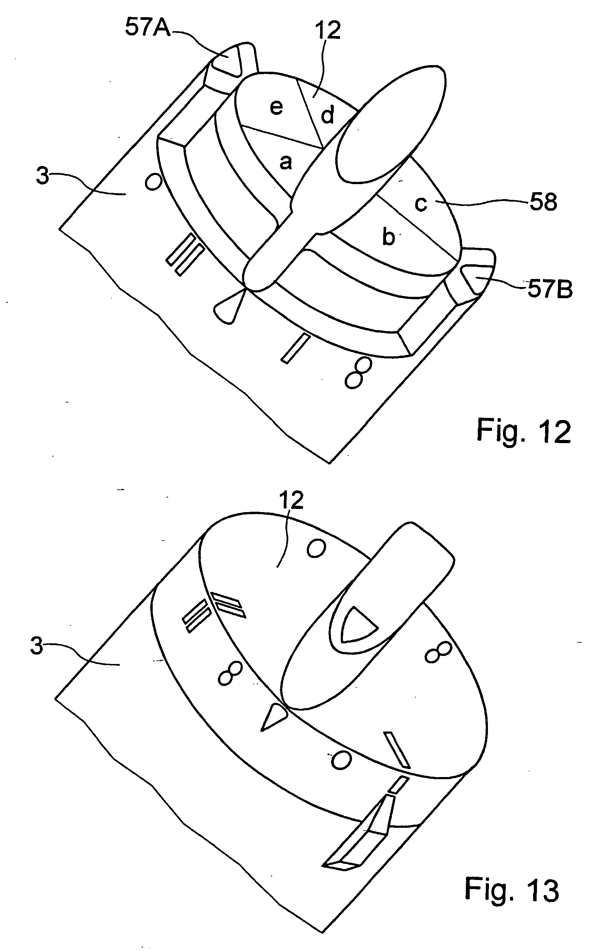

Die Figuren 12 und 13 zeigen jeweils den Drehknopf 12 in einer dreidimensionalen Darstellung, wobei der Drehknopf 12 mit Anzeigen für die jeweils angewählte Konfigurationsachse bzw. für die einzelnen angewählten Funktionen des hydraulischen Wegeventiles versehen ist. Dazu weist die Stirnseite des Drehknopfes 12 einen 360°-Vollkreis auf, der in fünf Symbolfelder, welche den Konfigurationsachsen "a" bis "e" entsprechen, aufgeteilt ist. Des weiteren sind zwei Bezugspfeile 57A, 57B mit halben Feldversatz vorhanden, die mit den Symbolfeldern zusammenwirken.

Bei der Ausführung nach Figur 13 findet sich eine andere Symbolik als in Figur 12, wobei die Stellung des Kodierkörpers 9 im Inneren der Federkappe 3 jeweils sowohl an der Außenseite der Federkappe 3 als auch an der Stirnseite des Drehknopfes 12 ablesbar ist.

Die Figuren 14 bis 17 zeigen weitere Details des Drehknopfes 12, welcher mit einer Rasteinrichtung 58 und einer Druckbegrenzungseinrichtung 59 für den Rastraum 40 versehen ist.

Die Rasteinrichtung 58 besteht vorliegend aus einer Rastnase 60, welche an der der Federkappe 3 zugewandten Stirnseite des Drehknopfes 12 vorgesehen ist. Die Rastnase 60 korrespondiert mit mehreren mit den Konfigurationsachsen des Kodierkörpers 9 korrespondierenden Rastnuten 61, welche in der dem Drehknopf 12 zugewandten Stirnseite der Federkappe 3 eingearbeitet sind. Mit dieser Ausgestaltung der Federkappe 3 und des Drehknopfes 12 ist für einen Bediener eine Feststellung des Drehknopfes 12 deutlich wahrnehmbar. Indem ein Einrasten der Rastnase 60 in die betreffende Rastnut 61 bemerkt wird, kann ein undefiniertes Positionieren des Kodierkörpers 9 zwischen zwei Konfigurationsachsen vermieden werden.

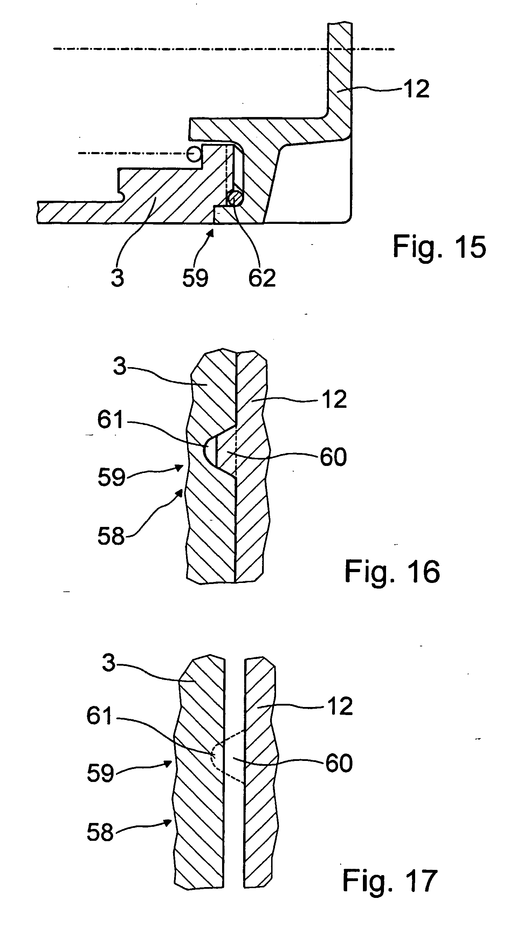

Des weiteren können eine oder mehrere Rastnuten 61 einen Teil der Druckbegrenzungseinrichtung 59 ausbilden, wobei die Druckbegrenzungseinrichtung 59 wie in Figur 15 dargestellt ausgestaltet sein kann.

Der Drehknopf 12 ist hier aufgrund seiner axialen Vorspannung und seiner axialen Beweglichkeit ab einem gewissen Druck innerhalb des Rastraumes 40 von der Federkappe 3 abhebbar, so daß der über einen Ölring 62 abgedichtete Drehknopf 12 einen Austritt von Hydraulikflüssigkeit aus dem Rastraum 40 an die Umgebung zuläßt. Dabei wird durch die axiale Bewegung des Drehknopfes 12 bzw. durch ein Abheben des Drehknopfes 12 von der Federkappe 3 ein Spalt im Bereich der Rastnuten 61 gemäß der Darstellung in Figur 17 freigegeben und die axiale Pressung des Ölringes 62 reduziert, wodurch die Rastnut 61 bzw. der Druckbegrenzungsspalt in der Verlängerung der Rastnut 61 freigegeben wird. Damit kann der Innendruck des Rastraumes 40 abgebaut werden, und Lecköl tritt im Bereich zwischen dem Drehknopf 12 und der Federkappe 3 aus.

Alle Bauteile der Vorrichtung 1 sind derart ausgestaltet, daß sie zur Vermeidung einer Fehlmontage bezogen auf die weiteren Bauteile nur in einer Lage montiert werden können.

Des weiteren kann der Spalt 36 mit einer Glyd-Ring-Dichtung versehen werden, um einen Leckagestrom des Druckventiles 26 zu minimieren.

Die Erfindung ist nicht auf die dargestellten und beschriebenen Ausführungsbeispiele beschränkt, sondern umfaßt insbesondere auch Varianten, die durch Kombination von in Verbindung mit der vorliegenden Erfindung beschriebenen Merkmalen bzw. Elementen gebildet werden können sowie auch andere geeignete Einsatzbereiche als die aufgezeigten, wobei die Erfindung durch die Ansprüche definiert ist.

| Nummer | Bezeichnung | Nummer | Bezeichung |
|---|---|---|---|
| 1 | Vorrichtung | 33 | Kanal |
| 2 | Steuerschieber | 34 | Weitere Druckfeder |
| 3 | Federkappe | 35 A, B | Sicherungsringe |
| 4 | Ventilgehäuse | 36 | Spalt |
| 5 | Stift | 37 | Führungsbuchse |
| 6 | Längsnut | 38 | Federraum |
| 7 | Zwischenstück | 39 | Rücklaufbereich |
| 8 | Schraube | 40 | Rastraum |
| 9 | Kodierkörper | 47 | Spannfeder |
| 10 | Schnappring | 48 | Ring |
| 11 | Rechteckprofil | 49 | Stufenkolben |
| 12 | Drehknopf | 50 | Druckschaltventil |
| 13 | Feder | 51 | Betriebsraum |
| 14 | Federrückstelleinrichtung | 52 | Druckschaltventilfeder |
| 15 A, B | Federanlageelemente | 53 | Druckschaltventilkolben |
| 16 | Anschlagscheibe | 54 | Stellkolben |
| 17 | Rastleiste | 55 | Fläche des Kodierkörpers |
| 18 A, B | Nuten der Federkappe 3 | 56 | Anschlagnasen |
| 19 A, B | Halteringe | 57 A, B | Bezugspfeile |
| 20 | Bohrung | 58 | Rasteinrichtung |
| 21 | Rastkörper | 59 | Druckbegrenzungseinrichtung |
| 22 | Rastmulden | 60 | Rastnase |
| 23 | Teil der Rastleisten | 61 | Rastnuten |
| 24 | Längsbohrung | 62 | Ölring |
| 25 | Ausklinkeinrichtung | 63 | Kugelförmiger Ventilkörper |
| 26 | Druckventil | 41 | Flanschartiger Bereich |
| 27 | Ersten Bolzen | 42A, B | Durchgangsbohrung |
| 28 | Kolbenkörper | 43 | Federsystem |
| 29 | Druckfeder | 44 | Federelement |
| 30 | Stufenkolben, Ausklinkschieber | 45 | Buchsen für Rastkörper |
| 31 A, B | Steuerschrägen | 46 | Konusbuchse |
| 32 A, B | Ausklinkbolzen | 64 | Zylindrische Fortsetzung |
| | | | |
| 66 | Bohrung des Steuerschiebers | | |
| 67 | Sacklochbohrung | | |
| 68 | Blattfedern | | |
| 69 | Schlitz | | |
| 70 | Druckbolzen | | |
| 71 | Führungsbuchse | | |
| 72 | Oberfläche des Rastkörpers | | |
| 73 | Aussparung der Blattfeder | | |

## Patentansprüche

1. Vorrichtung (1) zum Verriegeln eines längsbeweglich geführten Bauteiles (2), insbesondere eines Steuerschiebers eines hydraulischen Wegeventiles, mittels der das längsbewegliche Bauteil (2) in axialen Stellungen über eine Rastierung haltbar ist, die über eine Ausklinkeinrichtung (25) spontan lösbar ist und wenigstens einen Rastkörper (21) aufweist, der in radialer Richtung beweglich geführt ist und mit einer dem Rastkörper (21) zugewandten profilierten Fläche (55) eines Kodierkörpers (9) zusammenwirkt, **dadurch gekennzeichnet, daß** die Profilierung der Fläche (55) in axialer Richtung und in Umfangsrichtung unterschiedlich ausgebildet ist und der Kodierkörper (9) axial verschieblich und drehbar in einer Federkappe (3) angeordnet ist, und wobei das längsbewegliche Bauteil (2) in axialer Richtung fest mit dem Kodierkörper (9) verbunden und der Kodierkörper (9) gegenüber dem längsbeweglichen Bauteil (2) drehbar ist.

2. Vorrichtung nach Anspruch 1, **dadurch gekennzeichnet, daß** der Rastkörper (21) am äußeren Umfang des Kodierkörpers (9) angeordnet ist und gegen die Fläche (55) des Kodierkörpers (9) in radialer Richtung drückbar ist.

3. Vorrichtung nach Anspruch 1 oder 2 **dadurch gekennzeichnet, daß** die Profilierung der Fläche (55) durch mehrere sich in Umfangsrichtung des Kodierkörpers (9) erstrekkende Rastmulden (22) und sich in axialer Richtung des Kodierkörpers (9) erstreckende Anschlagnasen (56) als Hubanschläge für das längsbewegliche Bauteil (2) ausgebildet sind.

4. Vorrichtung nach Anspruch 3, **dadurch gekennzeichnet, daß** die Rastmulden (22) zur Erhöhung einer Rastkraft vergrößerte Bereiche aufweisen.

5. Vorrichtung nach Anspruch 3 oder 4, **dadurch gekennzeichnet, daß** die Rastmulden (22) in axialer Richtung des Kodierkörpers (9) beabstandet zueinander angeordnet sind und wenigstens annähernd parallel zueinander verlaufen.

6. Vorrichtung nach einem der Ansprüche 1 bis 5, **dadurch gekennzeichnet, daß** die Ausklinkeinrichtung (25) einen koaxial zu dem längsbeweglichen Bauteil (2) und zum Kodierkörper (9) axial beweglich geführten Ausklinkschieber (30) aufweist, der mit wenigstens einer Steuerschräge (31A, 31B) eines verdickten Bereiches zum Ausklinken des Rastkörpers (21) aus einer Rastmulde (22) des Kodierkörpers (9) ausgebildet ist und mit einer Federrückstelleinrichtung (14) versehen ist.

7. Vorrichtung nach Anspruch 6, **dadurch gekennzeichnet, daß** die Steuerschräge (31A, 31B) mit wenigstens einem Ausklinkbolzen (32A, 32B) zum Ausklinken des Rastkörpers (21) aus einer Rastmulde (22) des Kodierkörpers (9) zusammenwirkt.

8. Vorrichtung nach einem der Ansprüche 1 bis 7, **dadurch gekennzeichnet, daß** der Rastkörper (21) mittels einem in radialer Richtung des Kodierkörpers (9) wirkenden Federsystem (43, 44) gegen den Kodierkörper (9) gedrückt ist.

9. Vorrichtung nach Anspruch 8, **dadurch gekennzeichnet, daß** das Federsystem (43) wenigstens eine Blattfeder (68) und einen damit verbundenen Druckbolzen (70) aufweist, wobei der Druckbolzen (70) den Rastkörper (21) gegen den Kodierkörper (9) drückt.

10. Vorrichtung nach Anspruch 9, **dadurch gekennzeichnet, daß** der Druckbolzen (70) an seinem dem Rastkörper (21) zugewandten Ende eine wenigstens annähernd kugelähnliche Kontur aufweist.

11. Vorrichtung nach Anspruch 9 oder 10, **dadurch gekennzeichnet, daß** eine dem Druckbolzen (70) zugewandte Anlagefläche des Rastkörpers (21) eine wenigstens annähernd kugelähnliche Kontur aufweist.

12. Vorrichtung nach Anspruch 11, **dadurch gekennzeichnet, daß** die kugelähnliche Kontur des Druckbolzens (70) und die kugelähnliche Kontur des Rastkörpers (21) derart ausgebildet sind, daß eine auf den Rastkörper (21) wirkende Haltekraft des Federsystems (43) im gerasteten Zustand des Rastkörpers (21) maximal ist.

13. Vorrichtung nach einem der Ansprüche 9 bis 12, **dadurch gekennzeichnet, daß** der Rastkörper (21) und der Druckbolzen (70) in einer Führungsbuchse (71) verschieblich angeordnet sind.

14. Vorrichtung nach einem der Ansprüche 1 bis 8, **dadurch gekennzeichnet, daß** der Rastkörper (21) mittels einer in axialer Richtung des Kodierkörpers (9) wirkenden Federelementes (47) gegen den Kodierkörper (9) drückbar ist, wobei zwischen dem Federelement (47) und dem Rastkörper (21) eine Konusbuchse (46) vorgesehen ist, über welche die axiale Federkraft des Federelementes (47) in eine radiale Druckkraft umgelenkt wird.

15. Vorrichtung nach Anspruch 14, **dadurch gekennzeichnet, daß** das axial wirkende Federelement (47) über einen Stufenkolben (49) mit einem Arbeitsdruck eines Wegeventiles beaufschlagbar ist.

16. Vorrichtung nach Anspruch 14 oder 15, **dadurch gekennzeichnet, daß** zwischen einer Pumpe und dem Stufenkolben (49) ein Druckschaltventil (50) angeordnet ist, wobei in Abhängigkeit eines Arbeitsdruckes des Wegeventiles eine dem Federelement (47) abgewandte Stirnseite des Stufenkolbens (49) mit dem Arbeitsdruck beaufschlagt wird oder zu einem Rücklaufbereich (39) des Wegeventiles hin entlastet wird.

17. Vorrichtung nach Anspruch 16, **dadurch gekennzeichnet, daß** das Druckschaltventil (50) mit einer als Blokkiereinrichtung ausgebildeten Stellschraube (54) versehen ist.

18. Vorrichtung nach einem der Ansprüche 1 bis 17, **dadurch gekennzeichnet, daß** der Kodierkörper (9) drehfest mit einem an der Federkappe (3) angeordneten Drehknopf (12) verbunden ist und in axialer Richtung in dem Drehknopf (12) beweglich geführt ist.

19. Vorrichtung nach Anspruch 18, **dadurch gekennzeichnet, daß** der Drehknopf (12) an seiner der Federkappe (3) zugewandten Stirnseite mit einer Rastkontur (60) zum definierten Einstellen einer bestimmten Position des Kodierkörpers (9) versehen ist.

20. Vorrichtung nach Anspruch 18 oder 19, **dadurch gekennzeichnet, daß** der Drehknopf (12) wenigstens an seiner der Federkappe (3) abgewandten Stirnseite eine mit der Profilierung des Kodierkörpers (9) korrespondierende Anzeigeeinrichtung aufweist.

21. Vorrichtung nach einem der Ansprüche 18 bis 20, **dadurch gekennzeichnet, daß** der Drehknopf (12) gegen die Federkappe (3) angefedert ist.

22. Vorrichtung nach einem der Ansprüche 18 bis 21,**dadurch gekennzeichnet, daß** der Drehknopf (12) mit einer Druckbegrenzungseinrichtung (59) ausgebildet ist, über welche ab einem Grenzdruckwert Hydraulikflüssigkeit aus einem Rastraum (40) führbar ist.

## Claims

1. Device (1) for locking a component part (2) that is guided in a longitudinally movable manner, in particular a control slide of a hydraulic directional control valve, by means of which the longitudinally movable component part (2) can be held in axial positions via a detent mechanism, which is capable of being released spontaneously via a releasing device (25) and exhibits at least one detent body (21) that is movably guided in the radial direction and interacts with a profiled surface (55) of a coding body (9) facing towards the detent body (21), **characterized in that** the profiling of the surface (55) is designed differently in the axial and in the peripheral direction, and the coding body (9) is disposed in a spring cap (3) so as to be axially movable and rotatable, and **in that** the longitudinally movable component part (2) is firmly linked with the coding body (9) in the axial direction and the coding body (9) can be rotated with respect to the longitudinally movable component part (2).

2. Device according to Claim 1, **characterized in that** the detent body (21) is arranged on the outer periphery of the coding body (9) and is capable of being pressed in the radial direction against the surface (55) of the coding body (9).

3. Device according to Claim 1 or 2, **characterized in that** the profiling of the surface (55) is executed as a plurality of detent recesses (22) extending in the peripheral direction of the coding body (9) and stop noses (56) extending in the axial direction of the coding body (9) as stroke limiters for the longitudinally movable component part (2).

4. Device according to Claim 3, **characterized in that** the detent recesses (22) exhibit enlarged areas to increase a detent force.

5. Device according to Claim 3 or 4, **characterized in that** the detent recesses (22) are arranged at a distance from one another in the axial direction of the coding body (9) and are oriented at least approximately parallel to one another.

6. Device according to one of Claims 1 to 5, **characterized in that** the releasing device (25) exhibits an axially movably guided release slide (30) oriented coaxially in relation to the longitudinally movable component part (2) and to the coding body (9), which release slide is executed with at least one control bevel (31A, 31B) in a thickened area for the purpose of releasing the detent body (21) from a detent recess (22) in the coding body (9) and is provided with a spring resetting device (14).

7. Device according to Claim 6, **characterized in that** the control bevel (31A, 31B) interacts with at least one release bolt (32A, 32B) for the purpose of releasing the detent body (21) from a detent recess (22) in the coding body (9).

8. Device according to one of Claims 1 to 7, **characterized in that** the detent body (21) is pressed against the coding body (9) by means of a spring system (43, 44) acting in the radial direction of the coding body (9).

9. Device according to Claim 8, **characterized in that** the spring system (43) exhibits at least one leaf spring (68) and a thrust bolt (70) attached thereto, and **in that** the thrust bolt (70) presses the detent body (21) against the coding body (9).

10. Device according to Claim 9, **characterized in that** the thrust bolt (70) exhibits an at least approximately spheroid contour at its end facing towards the detent body (21).

11. Device according to Claim 9 or 10, **characterized in that** a locating face of the detent body (21) facing towards the thrust bolt (70) exhibits an at least approximately spheroid contour.

12. Device according to Claim 11, **characterized in that** the spheroid contour of the thrust bolt (70) and the spheroid contour of the detent body (21) are configured in such a way that a retaining force of the spring system (43) acting upon the detent body (21) reaches its maximum level in the engaged condition of the detent body (21).

13. Device according to one of Claims 9 to 12, **characterized in that** the detent body (21) and the thrust bolt (70) are so arranged as to be capable of movement in a guide bush (71).

14. Device according to one of Claims 1 to 8, **characterized in that** the detent body (21) is capable of being pressed against the coding body (9) by means of a spring element (47) acting in the axial direction of the coding body (9), and **in that** provided between the spring element (47) and the detent body (21) is a conical bush (46), via which the axial spring force of the spring element (47) is transformed into a radially acting compressive force.

15. Device according to Claim 14, **characterized in that** the axially acting spring element (47) is capable of being subjected via a stepped piston (49) to an operating pressure of a directional control valve.

16. Device according to Claim 14 or 15, **characterized in that** a pressure sequence valve (50) is arranged between a pump and the stepped piston (49), and **in that**, depending on an operating pressure of the directional control valve, an end face of the stepped piston (49) facing away from the spring element (47) is subjected to the operating pressure or is relieved to a return area (39) of the directional control valve.

17. Device according to Claim 16, **characterized in that** the pressure sequence valve (50) is provided with an adjuster screw (54) executed as a blocking device.

18. Device according to one of Claims 1 to 17, **characterized in that** the coding body (9) is connected in a non-rotating manner to a control knob (12) arranged on the spring cap (3) and is movably guided in the control knob (12) in the axial direction.

19. Device according to Claim 18, **characterized in that** the control knob (12) is provided on its end face facing towards the spring cap (3) with a detent contour (60) for the defined setting of a specific position of the coding body (9).

20. Device according to Claim 18 or 19, **characterized in that** the control knob (12), at least at its end face facing away from the spring cap (3), exhibits an indicating device corresponding to the profiling of the coding body (9).

21. Device according to one of Claims 18 to 20, **characterized in that** the control knob (12) is spring-loaded against the spring cap (3).

22. Device according to one of Claims 18 to 21, **characterized in that** the control knob (12) is executed with a pressure-limiting device (59), via which hydraulic fluid is capable of being conducted from a detent space (40) above a limit pressure value.

## Revendications

1. Dispositif (1) pour bloquer un composant (2) à déplacement longitudinal, notamment un tiroir de commande d'un distributeur hydraulique, par lequel le composant mobile (2) peut être maintenu dans des positions axiales par un accrochage qui peut être libéré spontanément par un dispositif de décliquetage (25) et qui présente au moins un organe d'accrochage (21) pouvant se déplacer en direction radiale et coopérant avec une surface profilée (55) située en regard de l'organe d'accrochage (21) et appartenant à un corps de codage (9),
**caractérisé en ce que**
le profilage de la surface (55) est différent en direction axiale et en direction périphérique, le corps de codage (9) peut coulisser axialement et tourner dans un capot de ressort (3), et le composant mobile (2) est solidaire en direction axiale du corps de codage (9) qui lui-même peut tourner par rapport au composant (2) mobile longitudinalement.

2. Dispositif selon la revendication 1,
**caractérisé en ce que**
l'organe d'accrochage (21) est disposé sur la périphérie externe du corps de codage (9), et peut être mis en pression en direction radiale contre la surface (55) du corps de codage (9).

3. Dispositif selon la revendication 1 ou 2,
**caractérisé en ce que**
le profilage de la surface (55) est assuré par plusieurs cavités d'accrochage (22) s'étendant selon la direction longitudinale du corps de codage (9), et par des dents de butée (56) disposées selon la direction axiale du corps de codage (9) en constituant des butées pour le composant (2) mobile longitudinalement.

4. Dispositif selon la revendication 1,
**caractérisé en ce que**
les cavités d'accrochage (22) présentent des zones agrandies pour augmenter la force d'accrochage.

5. Dispositif selon la revendication 3 ou 4,
**caractérisé en ce que**
les cavités d'accrochage (22) sont écartées l'une de l'autre selon la direction axiale du corps de codage (9) en étant au moins à peu près parallèles.

6. Dispositif selon une des revendications 1 à 5,
**caractérisé en ce que**
le dispositif de décliquetage (25) présente un tiroir de décliquetage mobile axialement et coaxial au composant (2) et au corps de codage (9), qui comporte au moins un chanfrein de commande (31a, 31b) dans une zone épaissie, pour désengager l'organe d'accrochage (21) d'une cavité d'accrochage (22) du corps de codage (9) et qui est équipé d'un dispositif de rappel élastique (14).

7. Dispositif selon la revendication 6,
**caractérisé en ce que**
le chanfrein de commande (31a, 31b) coopère avec au moins un tourillon de décliquetage (32a, 32b) pour dégager l'organe d'accrochage (21) d'une cavité d'accrochage (22) du corps de codage (9).

8. Dispositif selon une des revendications 1 à 7,
**caractérisé en ce que**
l'organe d'accrochage (21) est mis en pression sur le corps de codage (9) par l'intermédiaire d'un système de ressort (43, 44) agissant selon la direction radiale du corps de codage (9).

9. Dispositif selon la revendication 8,
**caractérisé en ce que**
le système de ressort (43) comprend au moins un ressort à lame (68) auquel est reliée une tige de poussée (70) qui met en pression l'organe d'accrochage (21) sur le corps de codage (9).

10. Dispositif selon la revendication 9,
**caractérisé en ce que**
la tige de poussée (70) présente à son extrémité située du côté de l'organe d'accrochage (21) un contour au moins proche d'un contour sphérique.

11. Dispositif selon la revendication 9 ou 10,
**caractérisé en ce qu'**
une surface d'appui de l'organe d'accrochage (21), située en face de la tige de poussée (70), présente un contour au moins proche d'un contour sphérique.

12. Dispositif selon la revendication 11,
**caractérisé en ce que**
les contours de la tige de poussée (70) et de l'organe d'accrochage (21) proches d'un contour sphérique, sont constitués de manière que la force de maintien du système de ressort (43) qui agit sur l'organe d'accrochage (21), est maximale quand cet organe est au repos.

13. Dispositif selon une des revendications 9 à 12,
**caractérisé en ce que**
l'organe d'accrochage (21) et la tige de poussée (70) peuvent coulisser dans une douille de guidage (71).

14. Dispositif selon une des revendications 1 à 8,
**caractérisé en ce que**
l'organe d'accrochage (21) peut être mis en pression sur le corps de codage (9) par l'intermédiaire d'un élément de ressort (47) agissant selon la direction axiale du corps de codage (9), et entre cet élément de ressort (47) et l'organe d'accrochage (21), il est prévu une douille conique (46) transforme la force axiale de l'élément de ressort (47) en une force radiale de pression.

15. Dispositif selon la revendication 14,
**caractérisé en ce que**
l'élément de ressort (47) agissant axialement peut, par l'intermédiaire d'un piston étagé (49), être soumis à l'action de la pression de travail d'un distributeur.

16. Dispositif selon la revendication 14 ou 15,
**caractérisé en ce qu'**
entre une pompe et le piston étagé (49), une soupape de commutation de pression (50) permet, en fonction de la pression de travail du distributeur, d'actionner par la pression de travail une face frontale du piston étagé (49), éloignée de l'élément de ressort (47) ou de la décharger vers une zone de retour (39) du distributeur.

17. Dispositif selon la revendication 16,
**caractérisé en ce que**
la soupape de commutation de pression (50) est équipée d'une vis de réglage (54) constituant au dispositif de blocage.

18. Dispositif selon une des revendications 1 à 17,
**caractérisé en ce que**
le corps de codage (9) est solidaire en rotation d'un bouton de manoeuvre (12) monté sur le capot de ressort (3), et peut être axialement déplacé direction axiale dans le bouton de manoeuvre (12).

19. Dispositif selon la revendication 18,
**caractérisé en ce que**
sur sa face frontale en regard du capot de ressort (3), le bouton de manoeuvre (12), présente un contour d'accrochage (60) pour assurer le réglage d'une position définie du corps de codage (9).

20. Dispositif selon la revendication 18 ou 19,
**caractérisé en ce que**
le bouton de manoeuvre (12) présente au moins sur sa face frontale éloignée du capot de ressort (3) un dispositif indicateur correspondant au profilage du corps de codage (9).

21. Dispositif selon une des revendications 18 à 20,
**caractérisé en ce que**
le bouton de manoeuvre (12) est en pression élastique sur le capot de ressort (3).

22. Dispositif selon une des revendications 18 à 21,
**caractérisé en ce que**
le bouton de manoeuvre (12) est équipé d'un dispositif de limitation de pression (59) permettant, à partir d'une valeur limite de pression, d'évacuer un fluide hydraulique d'une chambre d'accrochage (40).
